(19) Europäisches Patentamt
European Patent Office
Office européen des brevets

(11) Veröffentlichungsnummer: **0 490 230 A2**

(12) # EUROPÄISCHE PATENTANMELDUNG

(21) Anmeldenummer: **91120736.3**

(22) Anmeldetag: **03.12.91**

(51) Int. Cl.5: **C08G 59/38**, C08L 63/00, C08J 5/24

(30) Priorität: **13.12.90 DE 4039715**

(43) Veröffentlichungstag der Anmeldung: **17.06.92 Patentblatt 92/25**

(84) Benannte Vertragsstaaten: **CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Staengle, Michael, Dr.**
**D 3,5**
**W-6800 Mannheim 1(DE)**
Erfinder: **Weber, Thomas, Dr.**
**Bruesseler Ring 4**
**W-6700 Ludwigshafen(DE)**
Erfinder: **Tesch, Helmut, Dr.**
**Im Schlittweg 9**
**W-6701 Roedersheim-Gronau(DE)**
Erfinder: **Allspach, Thomas, Dr.**
**Berliner Strasse 10**
**W-6702 Bad Duerkheim(DE)**
Erfinder: **Altstaedt, Volker, Dr.**
**Marienbader Strasse 2**
**W-6084 Gernsheim(DE)**
Erfinder: **Stutz, Herbert, Dr.**
**Im Eichbaeumle 98**
**W-7500 Karlsruhe 1(DE)**

(54) **Epoxidharzmischungen für Faserverbundwerkstoffe.**

(57) Die Erfindung betrifft Epoxidharzmischungen, enthaltend
A. ein Epoxidharz mit einer hohen Funktionalität,
B. ein Bisphenol F-Epoxidharz mit einer niedrigen Funktionalität,
C. gegebenenfalls ein Epoxidharz mit einer niedrigen Funktionalität und niedrigem Molekulargewicht,
D. einen N-haltigen Härter
E. gegebenenfalls einen Beschleuniger,
F. gegebenenfalls einen Kautschuk und
G. gegebenenfalls einen temperaturbeständigen Thermoplasten.

EP 0 490 230 A2

Erfindung betrifft wärmehärtbare Epoxidharz-Mischungen für Faserverbundwerkstoffe mit verbesserten Zähigkeiten und heiß/feucht-Eigenschaften.

Epoxidharze zur Herstellung von Hochleistungsverbundwerkstoffen durch Tränken von Verstärkungsfasern und nachfolgender thermischer Aushärtung sind bekannt. Wesentliche Anforderungen an Verbundwerkstoffe sind hohe Steifigkeit und Festigkeit, hohe Schadenstoleranz nach Schlagbeanspruchung und hohe Temperaturbeständigkeit. Durch Wasseraufnahme der Epoxidharze in den Verbundwerkstoffen sinken unter realen Umweltbedingungen die Erweichungstemperaturen der Materialien und dadurch auch die Festigkeitseigenschaften bei höheren Temperaturen (heiß/feucht-Eigenschaften) ab.

Insbesondere für die Anwendung bei sogenannten Primärstrukturen im Flugzeugbau werden Bauteile mit verbessertem Schadenstolerenzverhalten und verbesserten heiß/feucht-Eigenschaften gefordert. Für solche verbesserte Bauteile benötigt man Harze höherer Zähigkeit und höherer Erweichungstemperatur nach Wasseraufnahme bei gleichzeitig hoher Steifigkeit.

Die meisten bekannten Maßnahmen zur Verbesserung der Zähigkeit von Epoxidharzen führen jedoch zu einem Abfall der Erweichungstemperatur und der Steifigkeit. Umgekehrt führen Maßnahmen zur Erhöhung der Erweichungstemperatur und des Moduls im allgemeinen zu einer Versprödung des Materials.

Üblicherweise sind Epoxidharze, die im Flugzeugbau Verwendung finden, aus hochfunktionellen Epoxid-Bausteinen aufgebaut. Ein in vielen Epoxidharzformulierungen verwendeter Baustein ist das 4-funktionelle Tetraglycidyl-Diaminodiphenylmethan (TGDDM). Die hohe Vernetzungsdichte nach der Aushärtung bewirkt eine hohe Steifigkeit und Temperaturbeständigkeit, ist aber andererseits auch Ursache für die mangelnde Zähigkeit des Materials.

Üblicherweise setzt man zur Reduzierung ver Vernetzungsdichte Mischungen aus 4-funktionellen und niedermolekularen 2-funktionellen Epoxid-Bausteinen ein. Damit erreicht man zwar bei hohen Konzentrationen der 2-funktionellen Komponente eine Verbesserung der Zähigkeit, jedoch sinken Steifigkeit und Temperaturbeständigkeit stark ab. Am Beispiel von Mischungen aus TGDDM und Bisphenol A-Diglycidylether (DGEBA) mit einem mittleren Molekulargewicht von etwa 380 (entsprechend einem Epoxidäquivalentgewicht von etwa 190), die mit 4,4'-Diaminodiphenylsulfon gehärtet werden, ist dies von Niederstadt in Kunststoffberater 11/12, S. 25 (1983) gezeigt worden.

Die DE-A 38 29 662 beschreibt Epoxidharzmischungen für Faserverbundwerkstoffe, enthaltend

A. ein Epoxidharz mit einer hohen Funktionalität,

B. ein Epoxidharz mit einer niedrigen Funktionalität und hohem Molekulargewicht (hohes Epoxidäquivalentgewicht) und gegebenenfalls

C. ein Epoxidharz mit einer niedrigen Funktionalität und niedrigem Molekulargewicht.

Derartige Epoxidharzmischungen ergeben zwar beim Aushärten Formkörper mit guter Zähigkeit und Wärmebeständigkeit; die Wasseraufnahme ist aber zu hoch und der Schubmodul in feuchtem Zustand ist zu niedrig.

Der Erfindung lag die Aufgabe zugrunde, Epoxidharzmischungen zu entwickeln, die beim Aushärten Formkörper mit verbesserter Steifigkeit ergeben, ohne daß aber Zähigkeit und Wärmebeständigkeit merklich verringert werden. Insbesondere sollen die Formkörper eine verhältnismäßig geringe Wasseraufnahme und eine hohe Steifigkeit in feuchtem Zustand aufweisen.

Es wurde nun gefunden, daß die Aufgabe überraschenderweise gelöst wird, wenn man Mischungen aus höherfunktionellen Epoxidharzen mit 2-funktionellen Bisphenol-F-Epoxidharzen in einem bestimmten Mischungsverhältnis einsetzt und diese mit üblichen Härtern zu Formstoffen aushärtet.

Gegenstand der Erfindung sind also Epoxidharzmischungen, enthaltend

A. 100 Gew.-Teile eines Epoxidharzes mit einer mittleren Funktionalität von 3 oder größer,

B. 70 bis 200, vorzugsweise 80 bis 150 Gew.-Teile eines Bisphenol-F-Epoxidharzes mit einer mittleren Funktionalität von 1,5 bis 2,2, bevorzugt 1,8 bis 2 und einem Epoxidäquivalentgewicht von kleiner als 250;

B' weniger als 10 Gew.-teile, vorzugsweise weniger als 1 Gew.-teil und insbesondere 0 Gew.-Teile eines Bisphenol-F-Epoxidharzes mit einem Epoxidäquivalentgewicht von größer als 250;

C. gegebenenfalls 1 bis 100, vorzugsweise 5 bis 50 Gew.-Teile eines Epoxidharzes mit einer mittleren Funktionalität von kleiner als 2,5 und einem Epoxidäquivalentgewicht von kleiner als 500, vorzugsweise von kleiner als 250;

D. 3 bis 300, vorzugsweise 5 bis 250 Gew.-Teile (bezogen auf A bis C) eines N-haltigen Härters;

E. gegebenenfalls 0,1 bis 10 Gew.-Teile (bezogen auf A bis C) eines Härtungsbeschleunigers;

F. gegebenenfalls 1 bis 10 Gew.-Teile (bezogen auf A bis C) eines Kautschuks; und

G. gegebenenfalls 1 bis 50 Gew.-Teile (bezogen auf A bis C) eines thermoplastischen Polymeren mit einer Erweichungstemperatur oberhalb von 90 °C.

Zu den Einsatzstoffen ist im einzelnen folgendes zu sagen:

A) Als EP-Harze mit einer mittleren Funktionalität von 3 oder größer sind aromatische EP-Harze bevorzugt, die 3 oder 4 EP-Gruppen pro Molekül und eine Erweichungstemperatur unterhalb von 30 ° C haben.

Geeignete EP-Harze sind z.B. Tetraglycidyl-Diaminodiphenylmethan (Araldit MY 720 und Araldit MY 721 von CIBA-GEIGY), Triglycidyl-Aminophenol Araldit MY 0510) und Triglycidyl-Triphenolmethan Tactix 742 von DOW). Auch Mischungen von zwei oder mehr ER-Harzen können eingesetzt werden.

B) Die Bisphenol-F-Epoxidharze weisen eine mittlere Funktionalität von 1,5 bis 2,2 auf, ihr Epoxidäquivalentgewicht ist kleiner als 250. Die Erweichungstemperatur liegt vorzugsweise zwischen -10 und -30 ° C. Das ihnen zugrundeliegende Bisphenol F ist ein Monomerengemisch der Formel

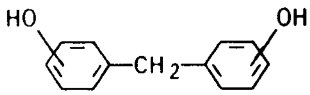

Bevorzugt ist dabei der Anteil an o,o-Substitution größer als 5 %, insbesondere größer als 10 %, und der Anteil an p,p-Substitution kleiner als 60 %, insbesondere kleiner als 50 %.

Besonders geeignet ist PY 306 (CIBA-GEIGY) mit 14,5 % o,o- und 37 % p,p-Substitution, verwendet werden kann auch Rütapox 0 158 (BAKELITE) mit 6,8 % o,o- und 50,5 % p,p-Substitution.

C) Bevorzugte weitere EP-Harze sind solche mit einer Funktionalität von kleiner als 2,5 und einem Epoxidäquivalentgewicht von kleiner als 500, vorzugsweise kleiner als 250. Beispiele sind Bisphenol A-Diglycidylether, z.B. Epikote 828 von SHELL mit EEW von ca. 190, DER 332 von DOW (EEW etwa 170), DER 661 (EEW etwa 500), Dicyclopentadienyldiglycidether (Tactix 556 von DOW), sowie Fluorendiglycidether (RSS 1079 von SHELL).

D) Bevorzugte Härter sind aliphatische, alicyclische und aromatische Diamine mit einem Molekulargewicht unterhalb von 700 sowie Dicyandiamid. Besonders bevorzugt sind aromatische Amine, z.B. 4,4'-Diaminodiphenylsulfon (DDS) in einer Konzentration von etwa 0,5 bis 1,8 NH-Gruppen pro EP-Gruppe.

E) übliche für die Härtung verwendete Beschleuniger sind z.B. Bortrifluorid-Ethylamin, Imidazol-Verbindungen sowie N-4-Chlorphenyl-N'-dimethylharnstoff und N-3,4-Dichlorphenyl-N'-dimethylharnstoff.

F) übliche für die Zähmodifizierung von ER-Harzen verwendete Kautschuke sind z.B. carboxylterminierte Acrylnitril-Butadienkautschuke organofunktionelle Siloxane sowie Acrylatkautschuke.

G) Bevorzugt sind aromatische nieder- oder hochmolekulare Thermoplaste wie z.B. Polyhydroxyether, Polyimide, Polyethersulfone (z.B. Ultrason E 1010 der BASF) oder Polysulfone, die vorzugsweise in der ER-Harz-Mischung löslich sind.

Darüber hinaus kann die Mischung andere übliche Zuschlagstoffe wie Pigmente, Flammschutzmittel oder sonstige Hilfsmittel enthalten.

Die erfindungsgemäßen Harze sind als Imprägnierharze zur Herstellung von Prepregs geeignet. Dazu werden z.B. Glas-, Kohlenstoff- oder Aramidfasern unter Bildung von unidirektionalen Prepregs, Gewebeprepregs oder Prepreg-Rovings entweder aus der Schmelze oder aus Lösung getränkt.

Die Herstellung der Harzmischung erfolgt dabei durch Mischen der Komponenten in einem Lösungsmittel oder direkt in der Schmelze. Mischt man direkt in der Schmelze, so werden zunächst die EP-Komponenten bei Temperaturen von ca. 80 bis ca. 150 ° C zusammengegeben und danach gegebenenfalls Additive wie Kautschuke oder Thermoplaste in der Mischung gelöst. Verwendet man carboxylterminierte Butadien-Acrylnitril-Kautschuke, so wird zur chemischen Anbindung des Kautschuks an die EP-Harze die Mischung unter Zusatz eines üblichen Katalysators, z.B. Triphenylphosphin, einige Zeit bei Temperaturen von ca. 110 bis 130 ° C gehalten. Danach wird die Mischung gekühlt und Härter und ggf. Beschleuniger werden zugesetzt. Bei den bevorzugten aromatischen Aminhärtern erfolgt das bei Temperaturen von etwa 80 bis 110 ° C. Die fertige Harzmischung wird auf handelsüblichen Prepreganlagen, z.B. nach dem Harzfilmtransferverfahren verarbeitet. Sollen die Prepregs durch Tränken der Fasern mit Harzlösungen hergestellt werden, wird die Mischung in einem Lösungsmittel, bevorzugt Aceton, hergestellt und das Lösungsmittel wird nach Tränken der Fasern verdampft.

Die Härtung der Prepregs zum Faserverbundwerkstoff erfolgt bei 150 bis 250 ° C, bevorzugt bei 160 bis 200 ° C.

Beispiele

Herstellung der Harzformulierungen

Beispiele

Eine Epoxidharzmischung (s. Tabelle) wird auf 120 °C erhitzt. Nachdem eine vollkommen homogene Mischung vorliegt, wird auf 95 bis 100 °C abgekühlt und gemahlenes 4,4'-Diaminodiphenylsulfon zugesetzt. Zur homogenen Verteilung wird 30 min. intensiv gerührt. Danach wird die Mischung zur Entfernung eingeschlossener Luft evakuiert.

Nach dieser Methode werden alle im folgenden beschriebenen Harzmischungen hergestellt. In Beispiel 6 wird der Thermoplast vor der Zugabe des Härters bei 140 °C in der Epoxidharzmischung gelöst.

Probekörperherstellung und Prüfung (unverstärkte Probekörper)

Die Harzmischungen werden zwischen vorgeheizten, mit einem Trennmittel besprühten Stahlplatten in einem Umluft-Wärmeschrank zu 4 mm dicken Platten der Größe 250 x 250 mm ausgehärtet (Härtung: 2 h bei 150 °C und nachfolgend 2 h bei 200 °C). Aus den gehärteten Platten werden Probekörper herausgefräst für folgende Prüfungen:

- Kritischer Spannungsintensitätsfaktor $K_{IC}$ (nach ASTM-E-399)
- Erweichungstemperatur $T_S$ (trockene und feucht-gelagerte Probekörper)
- Schubmodul G' bei 23 °C (trocken)
- Schubmodul G' bei 82 °C (feucht)
- Wasseraufnahme bei Feuchtlagerung

Schubmoduln und Erweichungstemperaturen werden mit dem Gerät RDA-700 der Fa. Rheometrics bei einer Frequenz von 1 Hz und einer Aufheizrate von 4 K/min bestimmt (Probekörperdimensionen 53 x 11x4 mm). Als Erweichungstemperaturen werden die Schnittpunkte der Tangenten an den Schubmodulkurven definiert. Zur Bestimmung der Daten nach Feuchtlagerung werden Proben 30 Tage in 70 °C warmem destilliertem Wasser gelagert. Die Wasseraufnahme wird gravimetrisch ermittelt.

Anhand der in Tab. 1 aufgeführten erfindungsgemäßen (Bsp. 1 bis 3 und 6) und Vergleichsbeispiele (Bsp. 4 und 5) und der dazugehörigen Eigenschaften in Tab. 2 wird der Vorteil der erfindungsgemäßen Harzformulierungen deutlich.

Tabelle 1

| Zusammensetzung der Mischungen (Gew.-Teile) | | | | | | | |
|---|---|---|---|---|---|---|---|
| Komponente | | Beispiel | | | | | |
| | | 1 | 2 | 3 | 4 | 5 | 6 |
| A | Tactix 742 | 31,9 | 23,7 | 20,3 | 23,7 | 31,9 | 20,1 |
| A | MY 0510 | - | 17,8 | 23,2 | 17,8 | - | 15,1 |
| B | PY 306 | 31,9 | 17,8 | 11,6 | - | - | 15,1 |
| C | DER 332 | - | - | 3,1 | 17,8 | 31,9 | - |
| D | DDS | 36,2 | 40,8 | 40,8 | 40,8 | 36,2 | 34,7 |
| G | Ultrason E | - | - | - | - | - | 15,0 |

Tabelle 2

| Eigenschaften der gehärteten Formkörper | | | | | | |
|---|---|---|---|---|---|---|
| | Beispiel | | | | | |
| | 1 | 2 | 3 | 4 | 5 | 6 |
| KIC [MPa $m^{1/2}$] | 0,50 | 0,56 | 0,55 | 0,53 | 0,59 | 0,66 |
| Ts trocken [°C] | 202 | 215 | 214 | 228 | 229 | 216 |
| Ts feucht [°C] | 153 | 147 | 144 | 150 | 157 | 152 |
| G' trocken 23°C [MPa] | 1265 | 1264 | 1231 | 1191 | 1091 | 1179 |
| G' feucht 82°C [MPa] | 941 | 915 | 884 | 869 | 834 | 873 |
| Wasseraufnahme [%] | 3,8 | 4,6 | 5,1 | 4,9 | 4,1 | 4,2 |

Durch den Zusatz des Thermoplasten Ultrason E im Beispiel 6 wird - im Vergleich zu Beispiel 2 - der Schubmodul G' vermindert, die Zähigkeit KIC wird jedoch erhöht. Der Thermoplast wurde zugesetzt, um die für die Prepregherstellung nichtige Fließfähigkeit des Harzes zu verbessern.

Prepregherstellung

Aus den Harzmischungen wird auf einer Beschichtungsmaschine ein Harzfilm auf einem Trennpapier hergestellt, der auf einer Prepregmaschine nach dem Harzfilmtransferverfahren mit parallelisierten Kohlenstoff-Faser-Rovings vom Typ Celion G30-500/12K (BASF Structural Materials) zu einem unidirektionalen Prepreg verarbeitet wird. Harzgehalt und Faserflächengewicht werden so eingestellt, daß nach dem Aushärten ein Laminat mit 60 Vol.% Fasern und einer Dicke von 0,125 mm pro Prepreglage erhalten wird. Die Prepregs werden mit einer Schutzfolie versehen, aufgewickelt und bis zur Laminatherstellung bei -18°C gelagert.

Probekörperherstellung und Prüfung

Aus den Prepregs werden Laminate für Prüfungen mechanischer Eigenschaften nach SACMA SRM 1/88 (0° Druckfestigkeit), SRM 2/88 (Compression after Impact), SRM 4/88 (Zugfestigkeit), SRM 8/88 (interlaminare Scherfestigkeit ILS) und nach NASA RP 1092 (interlaminare Rißzähigkeit $G_{IC}$) und ein Double Cantilever Beam zur Messung der interlaminaren Rißzähigkeit $G_{IIC}$ (end notched flexure) hergestellt. Die Härtung erfolgt im Autoklaven bei einem Druck von 6 bar im Vakuumsack, einer Aufheizrate von 1 bis 3°C/min von Raumtemperatur auf 177°C und einer Härtungszeit von 120 min. bei 177°C. Der Faservolumengehalt der Laminate beträgt 60 %.

An den aus der Harzformulierung 6 mit den Kohlenstoffasern hergestellten Laminaten werden folgende Eigenschaften bei einer Prüftemperatur von 23°C gemessen werden:

| | |
|---|---|
| $G_{IC}$ | 325 J • $m^{-2}$ |
| $G_{IIC}$ | 820 J • $m^{-2}$ |
| Compression after Impact (6,7 J/mm) | 195 MPa |
| 0°-Zugfestigkeit | 2209 MPa |
| 90°-Zugfestigkeit | 84 MPa |
| 0°-Druckfestigkeit, trocken, 23°C | 1545 MPa |
| 0°-Druckfestigkeit, feucht, 82°C | 1261 MPa |
| ILS, trocken, 23°C | 124 MPA |

## Patentansprüche

**1.** Epoxidharzmischungen, enthaltend

A. 100 Gew.-Teile eines Epoxidharzes mit einer mittleren Funktionalität von 3 oder größer,

B. 70 bis 200 Gew.-Teile eines Bisphenol F-Epoxidharzes mit einer mittleren Funktionalität von 1,5 bis 2,2 und einem Epoxidäquivalentgewicht von kleiner als 250;

B'. weniger als 10 Gew.-Teile eines Bisphenol F-Epoxidharzes mit einem Epoxidäquivalentgewicht

von größer als 250;
C. gegebenenfalls 1 bis 100 Gew.-Teile eines von B verschiedenen Epoxidharzes mit einer mittleren Funktionalität von kleiner als 2,5 und einem Epoxidäquivalentgewicht von kleiner als 500;
D. 3 bis 300 Gew.-Teile (bezogen auf A bis C) eines N-haltigen Härters;
E. gegebenenfalls 0,1 bis 10 Gew.-Teile (bezogen auf A bis C) eines Härtungsbeschleunigers;
F. gegebenenfalls 1 bis 10 Gew.-Teile (bezogen auf A bis C) eines Kautschuks; und
G. gegebenenfalls 1 bis 50 Gew.-Teile (bezogen auf A bis C) eines thermoplastischen Polymeren mit einer Erweichungstemperatur oberhalb von 90 ° C.

**2.** Epoxidharzmischungen nach Anspruch 1, dadurch gekennzeichnet, daß das dem Epoxidharz B zugrundeliegende Bisphenol F ein Isomerengemisch mit mehr als 10 % o,o-Substitution und weniger als 50 % p,p-Substitution ist.

**3.** Prepreg für Hochleistungsverbundwerkstoffe, enthaltend die Epoxidharzmischung nach Anspruch 1 und 30 bis 80 Gew.% Verstärkungsfasern.